# FASCICULE DE BREVET EUROPEEN

(11) **EP 0 727 025 B1**
(45) Date de publication et mention de la délivrance du brevet: **08.12.1999**
(21) Numéro de dépôt: 94928927.6
(22) Date de dépôt: 28.09.1994
(51) Int. Cl.: F16L 19/00

(54) **VERROU AUTO-BLOQUANT POUR CANALISATIONS**
SELBSTSICHERNDER RIEGEL FÜR ROHRLEITUNGEN
SELF-LOCKING UNION FOR PIPES

(30) Priorité: 29.09.1993 FR 9311612
(43) Date de publication de la demande: 21.08.1996
(73) Titulaire: JPB SYSTEME, 77170 Brie-Comte-Robert (FR)
(72) Inventeur: Marc, Jean-Pierre, F-77370 Nangis (FR); Barre, Bernard, F-94140 Alfortville (FR)
(74) Mandataire: Pontet, Bernard
(86) Numéro de dépôt international: FR9401136
(87) Numéro de publication internationale: WO9509317

(56) Documents cités:
- FR-A- 917 287
- GB-A- 693 517
- US-A- 4 655 482
- US-A- 5 083 819
- US-A- 5 186 501
- US-A- 5 188 398

## Description

La présente invention concerne le verrouillage mécanique d'un accouplement entre deux canalisations.

L'invention vise plus particulièrement mais non limitativement les accouplements standardisés comprenant un mamelon à l'extrémité de l'une des canalisations, destiné à être pressé dans un évasement de l'extrémité de l'autre canalisation, sous l'action de serrage d'un écrou prisonnier de l'une des canalisations et venant en prise avec un filetage formé sur l'autre canalisation.

Plusieurs techniques de freinage ou de blocage sont aujourd'hui employées :
- la technique du fil-frein. Cette technique, très utilisée dans le domaine aéronautique, ne garantit pas le maintien mécanique de l'assemblage. Ce système de freinage étant plus moral que mécanique.
- les techniques de freinage par rondelle plastique sertie dans l'écrou, par écrou élastifié ou déformé, par rondelle élastifiée, par frottement.

Ces systèmes limitent, soit le jeu d'assemblage du filetage du mamelon et de l'écrou, soit augmentent le couple nécessaire au desserrage. Ils ne garantissent donc pas totalement le risque de dévissage de l'installation lors de l'utilisation.

La plupart de ces techniques ne sont pas réutilisables après un démontage.

Une autre technique de freinage est connue d'après le US-A-5 083 819, selon lequel des languettes de freinage fixées au mamelon viennent s'appuyer élastiquement sur l'écrou. Cette technique est coûteuse.

On connaît par ailleurs, d'après le FR-A-917 287 un dispositif de verrouillage dans lequel un organe de verrouillage coulisse sur des cannelures ménagées en-deçà du filetage sur la canalisation portant le filetage. L'organe de verrouillage est sollicité par un ressort pour venir immobiliser l'écrou porté par l'autre canalisation. Ce dispositif n'est pas compatible avec les accouplements standards puisqu'il nécessité de prévoir des cannelures entre le filetage et la canalisation proprement dite. La longueur totale de l'accouplement s'en trouve modifiée et le coût total est très élevé. Le dispositif selon le US-A-5 188 398 est du même type, mais a en outre l'inconvénient que les cannelures et l'organe de verrouillage doivent être robustes car ils servent aussi à transmettre le couple de serrage.

Selon le US-A-4 655 482, l'écrou et le six-pans de l'autre canalisation sont utilisés pour immobiliser en rotation des pièces de verrouillage qui s'emboîtent sur eux. Les conformations à six-pans de la canalisation ne sont donc plus accessibles pour effectuer le serrage. Pour y remédier, les pièces de verrouillage présentent extérieurement des conformations à six-pans. L'encombrement radial est accru par les pièces de verrouillage, qui doivent en outre transmettre le couple de serrage.

Le but de la présente invention est ainsi de proposer un dispositif d'accouplement de canalisations et/ou un dispositif de verrouillage pour accouplement de canalisations dont le mode de verrouillage soit efficace, économique et compatible avec de nombreux standards, sans modifier sensiblement l'encombrement de l'accouplement.

Ce but est atteint avec les particularités contenues dans l'une et l'autre, respectivement, des revendications 1 et 6.

L'organe de maintien se positionnant autour du filetage a le double avantage de n'augmenter ni l'encombrement en longueur ni le plus souvent l'encombrement radial de la canalisation, et de pouvoir être très facilement fixé comme élément rapporté sur la canalisation.

L'organe de verrouillage coopère avec l'organe support, et non pas directement avec la canalisation, qui n'a donc pas besoin d'être modifiée pour cela. Comme les organes support et de verrouillage n'ont pas d'effort important à transmettre, ils peuvent être relativement économiques, minces et légers. Il est préférable que le ressort soit suffisamment souple pour permettre une compression manuelle.

Le dispositif est donc réutilisable après chaque démontage de l'écrou. Les dimensions et la course longitudinale de l'organe de verrouillage permettent à l'empreinte de l'organe de verrouillage, après serrage de l'écrou, de s'engager sur l'empreinte complémentaire de l'écrou et, avant desserrage de l'écrou, de libérer largement l'écrou par une compression manuelle de l'organe de verrouillage à l'encontre de l'action du moyen de rappel.

Il est avantageux que l'organe de verrouillage mobile, lorsqu'il est en position de retrait, ait une liberté de rotation par rapport à l'organe support. Le passage en position de verrouillage provoque simultanément un enclenchement entre les organes support et de verrouillage et la mise en prise des empreintes de l'organe de verrouillage et de l'écrou.

L'enclenchement peut de préférence avoir lieu dans plusieurs positions angulaires relatives, au choix, de l'organe de verrouillage par rapport à l'organe support. Ceci permet d'adapter la position angulaire de l'organe de verrouillage à la position prise par l'écrou en fin de serrage, et évite donc d'avoir à adapter le degré de serrage de l'écrou pour donner à l'écrou une position convenable pour mettre en prise mutuelle les empreintes de l'écrou et de l'organe de verrouillage.

Si l'organe de verrouillage, lorsqu'il est en position de retrait, a une totale liberté de rotation par rapport à l'organe support, les moyens d'enclenchement peuvent consister en une sorte de roue libre permettant à l'organe de verrouillage de tourner dans le sens du serrage de l'écrou, mais non dans le sens du desserrage. Pour cela, l'un des organes de support et de verrouillage peut comporter une denture à dents asymétriques, et l'autre de ces organes peut comporter une denture complémentaire ou simplement une ou plusieurs dent(s) isolée(s). Le ressort permet aux dents des deux organes de se franchir mutuellement à la manière d'un cliquet dans le sens du serrage de l'écrou. Par contre, dans le sens du desserrage, les dents butent les unes contre les autres par des faces à forte pente.

Il est préférable que des moyens de butée, constitués par les moyens d'enclenchement ou réalisés séparément, définissent la position longitudinale de l'organe de verrouillage lorsqu'il est en position de verrouillage.

Il est avantageux que des moyens de maintien maintiennent de manière amovible l'organe de verrouillage dans la position de retrait pour permettre à l'opérateur de lâcher l'organe de verrouillage afin de travailler librement sur l'écrou.

Ce maintien peut notamment être réalisé par un léger renflement cylindrique de la partie arrière de l'organe support afin qu'un ou plusieurs ergots de l'organe de verrouillage vienne(nt) s'encliqueter légèrement par élasticité derrière ce renflement. Si les moyens de retenue sont d'un type libérant l'organe de verrouillage en rotation par rapport à l'organe support lorsqu'il est en position de retrait, ces ergots peuvent être constitués par des dents qui ont aussi pour fonction de réaliser entre les organes support et de verrouillage un enclenchement empêchant l'organe de verrouillage de tourner par rapport à l'organe support lorsque l'organe de verrouillage est en position de verrouillage. Selon une variante, la fonction de maintien peut être assurée en engageant de tels ergots, par rotation de l'organe de verrouillage, dans un ou plusieurs dégagements associés à chaque groupe de dents devant coopérer avec un ergot déterminé.

Ce maintien ne doit tenir qu'au moment du travail de l'opérateur sur l'écrou. L'opérateur doit remettre l'organe de verrouillage en position de verrouillage après serrage de l'écrou. En cas d'oubli, il est préférable que le système puisse par l'action conjuguée du ressort et des vibrations de la tuyauterie en utilisation se remettre seul en position de verrou. Dans un tel cas, si les empreintes de l'organe de verrouillage et de l'écrou ne parviennent pas à s'emboîter spontanément, une face de l'organe de verrouillage vient quand même freiner l'écrou sous la poussée du ressort.

Cette face extérieure de l'organe de verrouillage peut avoir un état de surface rugueux pour mieux augmenter le couple de desserrage de l'écrou.

Pour minimiser l'encombrement radial du dispositif, il est avantageux que le ressort s'appuie contre une extrémité libre de l'organe support. Ainsi, l'épaisseur radiale du ressort se place dans le prolongement de celle de l'organe support, et le ressort laisse libre passage à l'écrou venant coopérer avec le filetage.

Il est avantageux que l'extérieur de l'organe de verrouillage ait un état de surface permettant une manipulation sans glissement des doigts de l'opérateur.

Certaines gravures sur l'organe de verrouillage peuvent indiquer la forme et la position de l'empreinte par rapport à la tête de l'écrou, ceci afin de faciliter le passage en position de verrouillage.

Les particularités et avantages de l'invention ressortiront encore de la description ci-après, relative à des exemples non-limitatifs.

Aux dessins annexés :
- la figure 1 est une vue en perspective, partiellement éclatée, d'un premier mode de réalisation de l'invention, la canalisation associée à l'écrou n'étant pas représentée ;
- les figures 2 et 3 sont deux vues en coupe axiale du dispositif de la figure 1, lorsque l'organe de verrouillage est en position de verrouillage et respectivement en position de retrait ;
- les figures 4 et 5 sont deux vues en élévation d'un deuxième mode de réalisation du dispositif de verrouillage, lorsque l'organe de verrouillage est en position de verrouillage et respectivement en position de retrait ;
- la figure 6 est une vue analogue à la figure 1 mais relative à un troisième mode de réalisation de l'invention ; et
- les figures 7 et 8 sont deux vues en élévation d'un quatrième mode de réalisation de l'invention, lorsque l'organe de verrouillage est en position de verrouillage et respectivement en position de retrait.

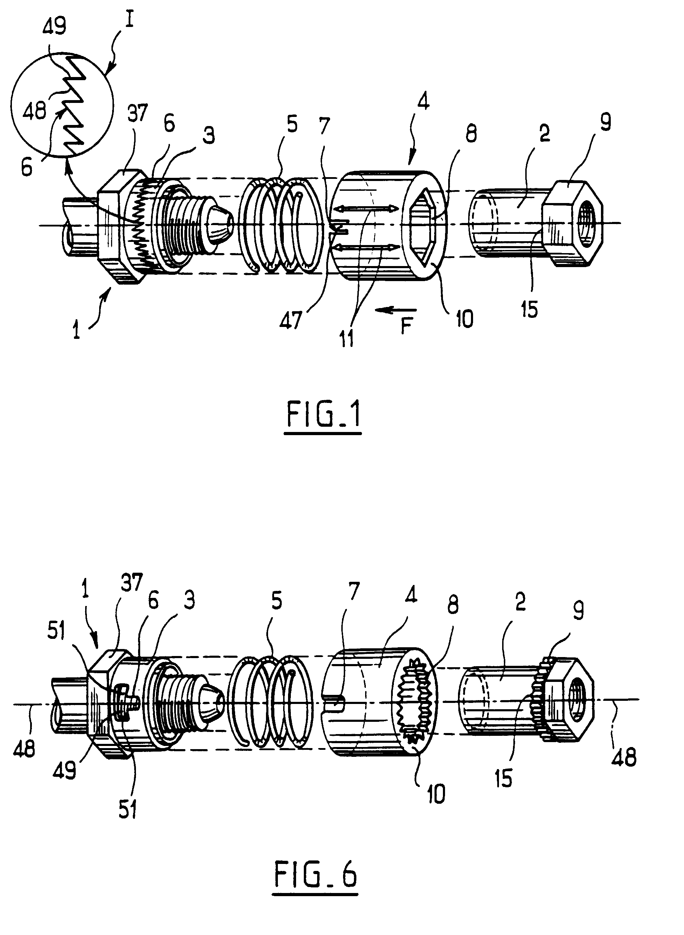

Comme le montrent les figures 1 à 3, le dispositif de verrouillage selon l'invention est adaptable à un accouplement de canalisations comprenant un premier embout 1 - ou mamelon -, solidaire d'une première des canalisations à raccorder, et un deuxième embout 31, rendu solidaire de la deuxième des canalisations à raccorder, ainsi qu'un écrou 2.

Les embouts 1 et 31 comportent à leur extrémité libre une conformation d'étanchéité mâle, de forme ovoide 32 et respectivement une conformation d'étanchéité femelle 33, de forme tronconique, destinées à prendre appui de manière étanche l'une contre l'autre. A partir de la conformation d'étanchéité ovoïde 32, le mamelon 1 comporte un filetage mâle 34 puis une collerette 36 portant sur sa périphérie une conformation de prise de rotation telle qu'une conformation à six-pans 37.

L'écrou 2 comporte à son extrémité arrière, opposée à l'embout 1, un collet intérieur 38 et une conformation extérieure de prise de rotation 9 telle qu'une conformation à six-pans. Le collet intérieur 38 vient en prise derrière un épaulement 39 de l'embout 31. L'épaulement 39 est tourné en direction opposée à l'embout 1 pour retenir l'écrou 2 prisonnier et pour recevoir de la part de l'écrou 2 une force sollicitant la conformation d'étanchéité 33 en appui d'étanchéité contre la conformation d'étanchéité 32 de l'embout 1.

L'écrou 2 comporte en outre à partir de son extrémité antérieure tournée vers l'embout 1 un filetage femelle 41 capable de coopérer avec le filetage 34 de l'embout 1 pour produire la force de serrage précitée.

Le dispositif de verrouillage selon l'invention comprend un organe support 3 - ou coupelle fixe - comportant à son extrémité arrière un collet 42 fixé par exemple par soudage contre la face antérieure, tournée vers l'embout 31, de la collerette 36. La périphérie du collet de fixation 42 est raccordée rigidement à l'extrémité arrière d'une jupe 43 qui s'étend vers l'embout 31 autour du filetage 34 du mamelon 1. Le diamètre de la jupe 43 est suffisant pour qu'il y ait entre le filetage 34 et la paroi intérieure de la jupe 43 un intervalle annulaire permettant l'engagement de l'écrou 2 lors de son vissage sur le filetage 34.

Au voisinage de son extrémité libre, tournée vers l'embout 31, la jupe 43 présente sur son pourtour extérieur une collerette annulaire 44 dont la face d'épaulement tournée en direction opposée à l'embout 31 est constituée par une denture 6 avec des dents saillant axialement.

Le dispositif de verrouillage comprend en outre un organe de verrouillage 4 - ou coupelle mobile - qui est emmanché sur la jupe 43 de la coupelle fixe 3 avec une liberté de coulissement dans le sens longitudinal. Pour cela, la coupelle mobile 4 a une paroi cylindrique dont le diamètre intérieur correspond au diamètre extérieur de la collerette 44 de la coupelle fixe 3, et présente à son extrémité tournée vers l'embout 1 un rebord 46 pour coulisser sensiblement sans jeu sur la jupe 43 en-dehors de la collerette 44. En même temps, grâce au rebord 46, la coupelle mobile 4 est rendue prisonnière de la coupelle fixe 3 et le mouvement de coulissement longitudinal de la coupelle mobile 4 par rapport à la coupelle fixe 3 est limité par butée du rebord 46 contre la collerette 44.

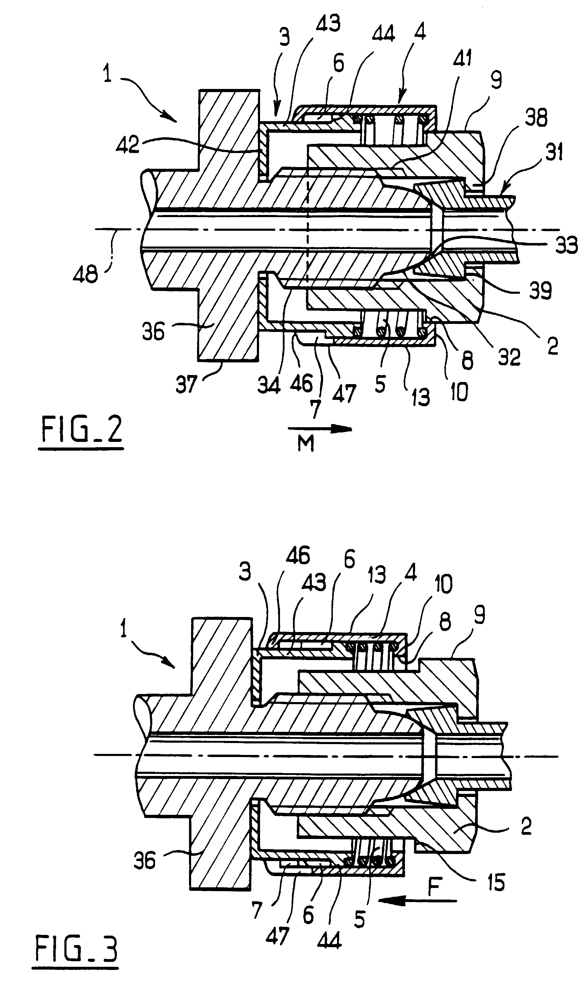

Comme le montre mieux la figure 1, en au moins un emplacement du pourtour de son bord arrière (figure 1), la coupelle mobile 4 porte deux fentes axiales définissant entre-elles une languette 47 ayant une certaine flexibilité et portant sur sa face tournée radialement vers l'intérieur une dent 7 qui s'enclenche dans la denture 6 de la coupelle fixe 3 lorsque la coupelle mobile 4 est dans la position de verrouillage représentée à la figure 2. Par cet enclenchement, la coupelle mobile 4 est empêchée de tourner par rapport à la coupelle fixe 3 autour de l'axe 48 du dispositif.

Par contre, dans la position de retrait de la coupelle mobile 4, représentée à la figure 3, dans laquelle la coupelle mobile 4 est repoussée vers la collerette 36 du mamelon 1, le rebord 46 de la coupelle mobile 4 est écarté axialement de la collerette 44 de la coupelle fixe 3 et la dent 7 est dégagée de la denture 6.

A son extrémité tournée vers l'embout 31, la coupelle mobile 4, qui est de forme générale cylindrique, possède un collet 10 définissant par son pourtour radialement intérieur un orifice hexagonale 8 constituant une empreinte à six-pans complémentaire de la conformation à six-pans 9 de l'écrou 2. Lorsque l'écrou 2 est serré sur le filetage 34 du mamelon 1, et que la coupelle mobile 4 est dans la position de verrouillage représentée à la figure 2, l'empreinte 8 de la coupelle mobile 4 est emboîtée sur l'empreinte complémentaire constituée par la conformation à six-pans 9 de l'écrou 2. Ceci immobilise l'écrou 2 à l'encontre de toute rotation relativement au mamelon 1, par l'intermédiaire de la coupelle mobile 4 elle-même empêchée de tourner par rapport à la coupelle fixe 3 par l'enclenchement de la dent 7 dans la denture 6.

Au contraire, lorsque la coupelle mobile 4 est dans la position de retrait représentée à la figure 3, l'empreinte 8 de la coupelle mobile 4 dégage la conformation à six-pans 9 de l'écrou 2 et permet donc à l'écrou 2 d'être vissé ou dévissé relativement au mamelon 1.

Un ressort hélicoïdal de compression 5 est monté entre la collerette 44 de la coupelle fixe 3 et le collet 10 de la coupelle mobile 4 pour solliciter la coupelle mobile 4 vers sa position de verrouillage, dans la direction M (figure 2). Ainsi, le verrouillage s'effectue et se maintient automatiquement une fois que l'écrou a été serré. Si l'opérateur effectue le verrouillage avec soin, il choisit la position angulaire convenable de la coupelle mobile 4 autour de l'axe 48, par rotation de la coupelle mobile 4 par rapport à la coupelle fixe 3 dans la position de retrait, puis il laisse le ressort 5 pousser la coupelle mobile 4 dans la position de verrouillage. Si au contraire l'opérateur laisse sans précaution particulière sur la position angulaire de la coupelle mobile 4 le ressort 5 pousser cette dernière vers l'écrou 2, les empreintes 8 de la coupelle fixe 3 et 9 de l'écrou 2 ne se trouveront pas nécessairement dans des positions angulaires concordantes mais néanmoins un certain effet de freinage sera réalisé entre l'écrou 2 et la coupelle mobile 4 dont la dent 7 est déjà engagée dans la denture 6 de la coupelle fixe 3. Si malgré cela l'écrou tendait à se desserrer, il atteindrait rapidement une position où la coupelle fixe 3 pourrait passer en position de verrouillage franc et tout desserrage supplémentaire serait évité.

Pour qu'en cas de verrouillage incomplet après serrage l'effet de freinage entre la coupelle de verrouillage 4 et l'écrou 2 soit substantiel, la face externe du collet 10 et l'épaulement 15 (figures 1 et 3) de l'écrou 2 contre laquelle elle va frotter peuvent présenter un état de surface rugueux, ou des aspérités, ou encore tout autre constitution susceptible d'accroître le coefficient de frottement entre-elles.

Le dispositif de verrouillage selon l'invention est réalisable en tant que sous-ensemble comprenant la coupelle fixe 3, la coupelle mobile 4 et le ressort 5. Ce sous-ensemble peut ensuite être emmanché d'un seul tenant sur le mamelon 1 à partir de son extrémité libre jusqu'à appui du collet 42 contre la collerette 36 et fixation appropriée par exemple au moyen d'une soudure. Par conséquent, le dispositif de verrouillage selon l'invention peut être rapporté sur une canalisation standard, même préexistante.

Dans une variante illustrée par le détail I de la figure 1, la denture 6 peut être asymétrique pour permettre la rotation de la coupelle mobile 4 dans le sens du vissage de l'écrou 2 même lorsque la coupelle mobile 4 est en position de verrouillage, grâce à une pente relativement faible des faces 48 de denture sur lesquelles s'appuie la dent 7 dans ce sens de rotation. Au contraire, l'autre face 49 des dents de la denture 6 est très raide pour empêcher la coupelle mobile 4 de tourner dans le sens du desserrage de l'écrou 2 lorsque la coupelle mobile 4 est en position de verrouillage. Ainsi, l'utilisation du dispositif est simplifiée car il n'est même plus nécessaire de ramener manuellement la coupelle mobile 4 en position de retrait pour pouvoir serrer l'écrou 2. La coupelle mobile 4 accepte de tourner dans le sens du serrage de l'écrou. Il est par contre nécessaire de ramener la coupelle 4 en position de retrait pour pouvoir effectuer un desserrage.

Comme le montre la figure 2, lorsque la coupelle mobile 4 est dans sa position naturelle de verrouillage sous l'action du ressort de rappel 5, elle s'étend à peu près, axialement, jusqu'à l'extrémité libre du mamelon 1, et par conséquent la coupelle fixe 3 et la coupelle mobile 4 sont capables de former ensemble une protection du mamelon 1, et en particulier du filetage 34 et de la conformation d'étanchéité 32 lorsque les deux canalisations sont désaccouplées, notamment à l'égard des détériorations mécaniques.

Le ressort 5 est également protégé. De plus, lorsque les deux canalisations sont accouplées, les coupelles fixe 3 et mobile 4 protègent l'ensemble de l'accouplement et le ressort. Par contre, la conformation à six-pans 37 de l'embout 1 demeure toujours accessible.

L'état de surface extérieur de la coupelle mobile 4 est rendu adhérent pour faciliter une bonne prise manuelle pour exercer un effort dans le sens F (figures 1 et 3). Des indications 11 (figure 1) telles que des flèches peuvent y être gravées pour indiquer le sens du verrouillage et du déverrouillage.

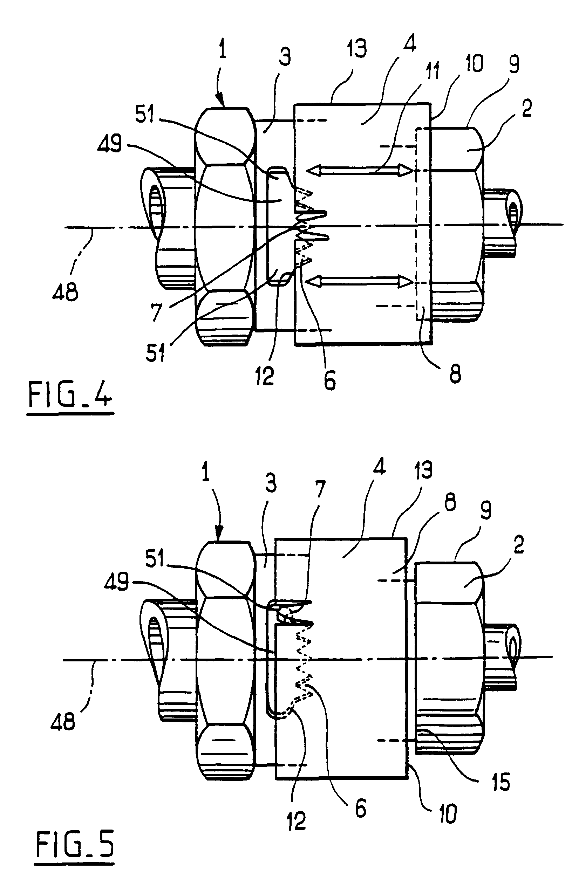

L'exemple des figures 4 et 5 ne sera décrit que pour ses différences par rapport à celui des figures 1 à 3.

La denture 6 ne s'étend plus sur toute la périphérie de la coupelle fixe 3, mis seulement sur une certaine plage angulaire autour de l'axe 48 et elle forme une partie du pourtour d'un évidemment 49 formé dans la paroi latérale extérieure de la coupelle fixe 3.

L'étendue angulaire de l'évidement 49 est plus grande dans la région occupée par la dent 7 lorsque la coupelle mobile 4 est en position de retrait que le long de la denture 6. Ceci définit deux dégagements 51 situés chacun à l'une des extrémités de la denture 6 et pouvant recevoir la dent 7 lorsque la coupelle mobile 4 a été rétractée en position de retrait comme représenté à la figure 5 puis tournée d'un certain angle. Une fois ceci réalisé, la dent 7 prend appui sur un bord d'arrêt 12 du dégagement 51 qu'elle occupe. En conséquence, la coupelle est maintenue en position de retrait à l'encontre de l'action du ressort de rappel (non représenté aux figures 4 et 5) pour permettre à l'opérateur de visser ou dévisser l'écrou 2 sans être gêné par la coupelle de verrouillage 4.

Les bords d'arrêt 12 des dégagements 51 présentent par rapport à la direction circonférentielle une certaine pente tendant à faire glisser la dent 7 vers la denture 6. Ainsi, le maintien de la dent 7 par les dégagements 51 est instable. En particulier, si l'opérateur a oublié de verrouiller l'écrou 2 après l'avoir resserré, les vibrations et autres mouvements de fonctionnement qui peuvent être subis par la canalisation finissent par provoquer le retour spontané de la coupelle mobile 4 vers la position de verrouillage.

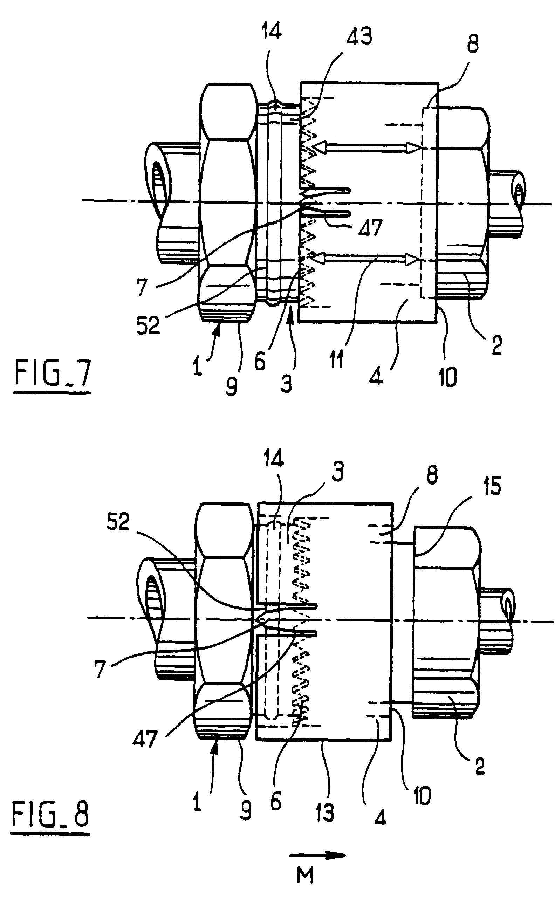

L'exemple de la figure 6 ne sera décrit pour ses différences par rapport à celui des figures 4 et 5.

L'empreinte 8 de la coupelle mobile 4 est composée d'une denture à relativement faible pas, dont les dents sont orientées vers l'axe 48. L'empreinte de l'écrou 2 consiste en une denture complémentaire 9 qui peut être formée directement sur l'écrou, ou que l'on a formée sur une bague qui a ensuite été rapportée par simple emmanchement puis fixée sur l'écrou contre la tête à six-pans.

Avec des empreintes à pas aussi petit, il n'est plus strictement nécessaire de prévoir plusieurs positions de verrouillage pour la coupelle mobile 4 par rapport à la coupelle fixe 3. C'est pourquoi, dans l'exemple de la figure 6, en position de verrouillage, la dent 7 de la coupelle mobile 4 pénètre dans un moyen de retenue constitué par un seul creux 6 de forme correspondante.

Le creux 6 fait partie d'un évidemment 49 qui est élargi circonférentiellement dans la région occupée par la dent 7 lorsque la coupelle mobile 4 est en position de retrait, de manière à former deux dégagements 51 comme il a été dit à propos des figures 4 et 5.

L'exemple des figures 7 et 8 ne sera décrit que pour ses différences par rapport à celui de la figure 2.

La jupe 43 de la coupelle fixe 3 présente entre la denture 6 et son extrémité arrière, un renflement annulaire 14 que la dent 7 doit franchir lorsque la coupelle mobile 4 va atteindre la position de retrait. Ainsi, en position de retrait, la coupelle mobile 4 est encliquetée de manière réversible derrière le léger épaulement 52 formé par le renflement 14 du côté de l'extrémité arrière de la jupe 43 à l'encontre de l'action du moyen de rappel non représenté à cette figure. Cet encliquetage est permis par flexion de la languette 47 portant la dent 7.

Pour ramener la coupelle mobile 4 en position de verrouillage, il suffit d'exercer un léger effort dans la direction M (figure 8), ou de laisser agir les vibrations comme il a été dit plus haut.

Les matériaux utilisés pour la réalisation des dispositifs qui viennent d'être décrits sont choisis suffisamment résistants pour garantir une utilisation en principe illimitée. Dans certains domaines techniques, ces matériaux pourront être inoxydables avec une tenue d'utilisation en température supérieure à celle demandée afin de conserver les propriétés mécaniques nécessaire à leur fonctionnement tel qu'il vient d'être décrit, ou même en alliage de titane si la tenue en température demandée est conséquente.

Le dispositif de verrouillage selon l'invention est particulièrement destiné à bloquer les accouplements de canalisation mamelon-écrou dans le domaine de la mécanique industrielle et tout particulièrement dans l'aéronautique.

Bien entendu, l'invention n'est pas limitée aux exemples décrits et représentés.

Les différents perfectionnements décrits sont compatibles entre eux d'une manière différente de celle présentée dans les modes de réalisation décrits.

Il est également concevable que la coupelle mobile ou autre organe de verrouillage soit solidaire en rotation de la coupelle fixe ou autre organe de maintien même lorsque l'organe de verrouillage est en position de retrait. Il n'est pas nécessaire que les moyens de maintien soient en partie constitués avec des moyens servant également à la retenue de l'organe de verrouillage à l'encontre des rotations par rapport à l'organe support.

Il est encore possible que les empreintes de l'écrou et de l'organe de verrouillage soient en prise permanente, la fonction de verrouillage déverrouillage ne s'effectuant qu'entre l'organe de verrouillage et l'organe support lorsque l'organe de verrouillage est en position de retrait.

## Revendications

1. Dispositif d'accouplement entre deux canalisations terminées par des conformations d'étanchéité (32, 33), une première (1) des canalisations portant un filetage ou analogue (34) en-deçà de sa conformation d'étanchéité (32) et l'autre canalisation (31) portant un écrou rotatif (2) pour coopérer avec le filetage ou analogue (34), et comprenant un dispositif de verrouillage pour verrouiller mécaniquement l'accouplement, ledit dispositif de verrouillage comportant un organe de verrouillage (4) mobile longitudinalement par rapport à la première canalisation (1), un moyen de rappel (5) sollicitant l'organe de verrouillage (4) à partir d'une position de retrait libérant l'écrou (2) et vers une position de verrouillage dans laquelle, lorsque les deux canalisations (1, 31) sont accouplées, une empreinte de verrouillage (8) de l'organe de verrouillage (4) coopère avec une empreinte complémentaire (9) de l'écrou, et des moyens de retenue (6, 7) pour empêcher l'organe de verrouillage (4) de tourner dans le sens du dévissage de l'écrou par rapport à la première canalisation (1) lorsque l'organe de verrouillage (4) est en position de verrouillage, caractérisé en ce que les moyens de retenue assurent la retenue de l'organe de verrouillage (4) par rapport à un organe support (3) fixé à demeure à la première canalisation (1) et s'étendant autour du filetage (34), avec entre l'organe support (3) et le filetage (34) une distance radiale suffisante pour permettre à l'écrou (2) de venir coopérer avec le filetage (34).

2. Dispositif selon la revendication 1, caractérisé en ce que l'empreinte (8) de l'organe de verrouillage et l'empreinte complémentaire (9) de l'écrou sont du type à six-pans.

3. Dispositif selon la revendication 1 ou 2, caractérisé en ce que l'empreinte (8) de l'organe de verrouillage (4) est une denture et l'empreinte complémentaire de l'écrou est une denture complémentaire (9) formée ou rapportée sur l'écrou (2).

4. Dispositif selon l'une des revendications 1 à 3, caractérisé en ce que l'organe support (3) et l'organe de verrouillage (4) forment ensemble une protection du filetage (34) et de la conformation d'étanchéité (32) de la première canalisation (1) lorsque les deux canalisations (1, 31) sont désaccouplées.

5. Dispositif selon l'une des revendications 1 à 4, caractérisé en ce que l'organe support (3) est fixable à la première canalisation (1) en un emplacement situé axialement entre le filetage ou analogue (34) et une conformation de prise telle qu'une conformation à six-pans (37), et laisse libre accès à la conformation de prise (37).

6. Dispositif pour verrouiller mécaniquement un accouplement entre deux canalisations terminées par des conformations d'étanchéité (32, 33), une première (1) des canalisations portant un filetage ou analogue (34) en-deçà de sa conformation d'étanchéité (32) et l'autre canalisation (31) portant un écrou rotatif (2) pour coopérer avec le filetage ou analogue (34), le dispositif de verrouillage comportant un organe de verrouillage (4) mobile longitudinalement par rapport à la première canalisation (1), un moyen de rappel (5) sollicitant l'organe de verrouillage (4) à partir d'une position de retrait libérant l'écrou (2) et vers une position de verrouillage dans laquelle, lorsque les deux canalisations (1, 31) sont accouplées, une empreinte de verrouillage (8) de l'organe de verrouillage (4) coopère avec une empreinte complémentaire (9) de l'écrou, et des moyens de retenue (6, 7) pour empêcher l'organe de verrouillage (4) de tourner dans le sens du dévissage de l'écrou par rapport à la première canalisation (1) lorsque l'organe de verrouillage (4) est en position de verrouillage, caractérisé en ce que les moyens de retenue assurent la retenue de l'organe de verrouillage (4) par rapport à un organe support (3) destiné à être fixé à demeure à la première canalisation (1) et s'étendant autour du filetage (34), avec entre l'organe support (3) et le filetage (34) une distance radiale suffisante pour permettre à l'écrou (2) de venir coopérer avec le filetage (34).

7. Dispositif selon l'une des revendications 1 à 6, caractérisé en ce que le moyen de rappel (5) agit entre l'organe de verrouillage (4) et l'organe support (3).

8. Dispositif selon la revendication 7, caractérisé en ce que l'organe de verrouillage (4), l'organe support (3) et le moyen de rappel (5) sont constitués en un sous-ensemble prêt à être emmanché sur la première canalisation (1) par l'extrémité comportant la conformation d'étanchéité (32), et à être fixé contre un épaulement de la première canalisation (1).

9. Dispositif selon l'une des revendications 1 à 8, caractérisé en ce que le moyen de rappel (5) s'étend à l'intérieur de l'organe de verrouillage (4) réalisé en forme de coupelle coulissant sur l'extérieur de l'organe support (3), et s'appuie sur l'organe support (3) au voisinage d'une extrémité libre de celui-ci, tournée vers l'écrou (2).

10. Dispositif selon l'une des revendications 1 à 8, caractérisé en ce que le moyen de rappel (5) s'étend à l'intérieur de l'organe de verrouillage (4) réalisé en forme de coupelle coulissant sur l'extérieur de l'organe support (3), et s'appuie sur une face d'une collerette (44) prévue sur la face extérieure de l'organe support (3), la collerette (44) ayant une face opposée (6) servant de moyen de butée limitant la course de l'organe de verrouillage (4) sous l'action du moyen de rappel (5).

11. Dispositif selon l'une des revendications 1 à 8, caractérisé en ce que l'organe support (3) et l'organe de verrouillage (4) comprennent des moyens de butée mutuelle (44, 46) qui limitent la course de l'organe de verrouillage (4) par rapport à l'organe support (3) sous l'action du moyen de rappel (5).

12. Dispositif selon la revendication 10 ou 11, caractérisé en ce que les moyens de butée (44, 46) limitant la course de l'organe de verrouillage (4) sous l'action du moyen de rappel (5) sont en même temps des moyens d'enclenchement (6, 7) faisant partie des moyens de retenue et qui assurent la liaison en rotation entre l'organe support (3) et l'organe de verrouillage (4) lorsque l'organe de verrouillage (4) est en position de verrouillage, l'organe de verrouillage (4) ayant, lorsqu'il est écarté de la position de verrouillage, au moins une certaine liberté de rotation par rapport à l'organe support (3).

13. Dispositif selon l'une des revendications 1 à 11, caractérisé en ce que lorsque l'organe de verrouillage (4) est en position de verrouillage, des moyens d'enclenchement (6, 7) solidarisent en rotation l'organe de verrouillage (4) et l'organe support (3), et lorsque l'organe de verrouillage (4) est en position de retrait, les moyens d'enclenchement (6, 7) sont désenclenchés et permettent une rotation de l'organe de verrouillage (4).

14. Dispositif selon la revendication 12 ou 13, caractérisé en ce que les moyens d'enclenchement (6, 7) sont capables de réaliser l'enclenchement dans plusieurs positions angulaires de l'organe de verrouillage (4) par rapport à l'organe support (3).

15. Dispositif selon la revendication 14, caractérisé en ce que les moyens d'enclenchement (6, 7) n'interdisent la rotation de l'organe de verrouillage (4), lorsqu'il est en position de verrouillage, que dans le sens du desserrage de l'écrou (2).

16. Dispositif selon la revendication 14 ou 15, caractérisé en ce que les moyens d'enclenchement (6, 7) comprennent une denture (6) sur l'un (3) des organes support et de verrouillage, l'autre (4) des organes support et de verrouillage comprenant au moins une dent (7) pouvant pénétrer dans l'un au choix des creux de la denture (6) lorsque l'organe de verrouillage (4) passe de la position de retrait à la position de verrouillage.

17. Dispositif selon la revendication 16, caractérisé en ce que la denture (6) est asymétrique pour n'interdire la rotation de l'organe de verrouillage (4) que dans le sens du desserrage de l'écrou (2).

18. Dispositif selon la revendication 14 ou 15, caractérisé en ce qu'au moins une dent (7) des moyens d'enclenchement (6, 7), appartenant à l'un (4) des organes support et de verrouillage, fait en même temps partie de moyens de maintien comportant en outre des moyens d'arrêt (12, 14) prévus sur l'autre (3) des organes support et de verrouillage, l'agencement étant tel que la dent (7) peut venir en prise avec les moyens d'arrêt (12, 14) pour retenir de manière amovible l'organe de verrouillage (4) en position de retrait.

19. Dispositif selon la revendication 18, caractérisé en ce que les moyens d'arrêt comprennent un dégagement (51) dans lequel la dent peut s'engager par rotation de l'organe de verrouillage (4) par rapport à l'organe support (3) lorsque l'organe de verrouillage (4) est en position de retrait.

20. Dispositif selon la revendication 18, caractérisé en ce que les moyens d'arrêt (12, 14) comprennent un épaulement (52) derrière lequel la dent (7) peut s'engager par déformation élastique lorsque l'organe de verrouillage (4) atteint la position de retrait.

21. Dispositif selon l'une des revendications 1 à 11, caractérisé en ce que dans la position de retrait les moyens de retenue (6, 7) permettent à l'organe de verrouillage (4) de tourner par rapport à l'organe support (3).

22. Dispositif selon l'une des revendications 1 à 15, caractérisé en ce qu'il comprend des moyens (7, 12, 14) de maintien de l'organe de verrouillage (4) dans la position de retrait.

23. Dispositif selon la revendication 22, caractérisé en ce que les moyens de maintien (7, 14) sont du type a encliquetage réversible.

24. Dispositif selon la revendication 23, caractérisé en ce que les moyens de maintien comprennent une dent (7) de l'un (4) des organes support et de verrouillage, capable de s'engager derrière un épaulement (52) de l'autre (3) des organes support et de verrouillage.

25. Dispositif selon la revendication 20 ou 24, caractérisé en ce que l'épaulement (52) est formé sur un renflement périphérique (14) de l'organe (3) portant les moyens d'arrêt (12, 14).

26. Dispositif selon l'une des revendications 18 à 20 et 22 à 25, caractérisé en ce que les moyens de maintien (7, 12, 14) sont conçus pour se libérer automatiquement sous l'action des vibrations.

27. Dispositif selon l'une des revendications 1 à 26, caractérisé en ce que l'organe de verrouillage (4) et l'écrou (2) sont capables de friction mutuelle sous l'action du moyen de rappel (5) lorsque l'empreinte de verrouillage (8) est incapable de s'engager sur l'empreinte complémentaire (9) de l'écrou (2).

## Patentansprüche

1. Kupplungsvorrichtung zwischen zwei durch Dichtungsformen (32, 33) abgeschlossene Rohrleitungen, wobei eine erste (1) der Rohrleitungen diesseits ihrer Dichtungsform (32) ein Außengewinde oder entsprechendes (34) trägt, und die andere Rohrleitung (31) zum Zusammenwirken mit dem Außengewinde oder entsprechendem (34) eine drehbare Schraubenmutter (2) trägt, wobei die Kupplungsvorrichtung eine Verriegelungsvorrichtung zum mechanischen Verriegeln der Kupplung aufweist und wobei die genannte Verriegelungsvorrichtung mit einem gegenüber der ersten Rohrleitung (1) in Längsrichtung bewegbaren Verriegelungsmittel (4), mit einem Rückstellmittel (5), welches das Verriegelungsmittel (4) ausgehend von einer, die Schraubenmutter (2) freigebenden, zurückgezogenen Stellung in Richtung auf eine Verriegelungsstellung beansprucht, in der, wenn die beiden Rohrleitungen (1, 31) gekuppelt sind, ein Verriegelungsprofil (8) des Verriegelungsmittels (4) mit einem dazu komplementären Profil (9) der Schraubenmutter zusammenwirkt, und mit Rückhaltemitteln (6, 7), um zu verhindern, daß sich das Verriegelungsmittel (4) in die Lockerungsrichtung der Schraubenmutter bezüglich der ersten Rohrleitung (1) dreht, wenn sich das Verriegelungsmittel (4) in Verriegelungsstellung befindet, ausgestattet ist,
**dadurch gekennzeichnet, daß** die Rückhaltemittel den Rückhalt des Verriegelungsmittels (4) bezüglich eines Stützmittels (3) gewährleisten, welches an der ersten Rohrleitung (1) fest angebracht ist und um das Außengewinde (34) herum verläuft, und wobei zwischen dem Stützmittel (3) und dem Außengewinde (34) ein ausreichender radialer Abstand ist, der es ermöglicht, daß die Schraubenmutter (2) mit dem Außengewinde (34) zusammenwirken kann.

2. Vorrichtung nach Anspruch 1,
**dadurch gekennzeichnet, daß** das Profil (8) des Verriegelungsmittels und das dazu komplementäre Profil (9) der Schraubenmutter von der Art eines Sechskants sind.

3. Vorrichtung nach Anspruch 1 oder 2,
**dadurch gekennzeichnet, daß** das Profil (8) des Verriegelungsmittels (4) eine Zahnung, und das dazu komplementäre Profil der Schraubenmutter eine auf der Schraubenmutter (2) gebildete, oder aufgebrachte, dazu komplementäre Zahnung (9) ist.

4. Vorrichtung nach einem der Ansprüche 1 bis 3,
**dadurch gekennzeichnet, daß** das Stützmittel (3) und das Verriegelungsmittel (4) gemeinsam einen Schutz für das Außengewinde (34) und die Dichtungsform (32) der ersten Rohrleitung (1) bilden, wenn die beiden Rohrleitungen (1, 31) abgekuppelt sind.

5. Vorrichtung nach einem der Ansprüche 1 bis 4,
**dadurch gekennzeichnet, daß** das Stützmittel (3) an der ersten Rohrleitung (1) an einer Stelle befestigbar ist, die sich in Axialrichtung zwischen dem Außengewinde oder entsprechendem (34) und einer Eingriffsform, wie einem Sechskant (37), befindet, und freien Zugriff zur Eingriffsform (37) läßt.

6. Vorrichtung zum mechanischen Verriegeln einer Kupplung zwischen zwei durch Dichtungsformen (32, 33) abgeschlossene Rohrleitungen, wobei eine erste (1) der Rohrleitungen diesseits ihrer Dichtungsform (32) ein Außengewinde oder entsprechendes (34) trägt, und die andere Rohrleitung (31) zum Zusammenwirken mit dem Außengewinde oder entsprechendem (34) eine drehbare Schraubenmutter (2) trägt, und die Verriegelungsvorrichtung ein bezüglich der ersten Rohrleitung (1) in Längsrichtung bewegbares Verriegelungsmittel (4), ein Rückstellmittel (5), welches das Verriegelungsmittel (4) ausgehend von einer, die Schraubenmutter (2) freigebenden, zurückgezogenen Stellung in Richtung auf eine Verriegelungsstellung beansprucht, in der, wenn die beiden Rohrleitungen (1, 31) gekuppelt sind, ein Verriegelungsprofil (8) des Verriegelungsmittels (4) mit einem dazu komplementären Profil (9) der Schraubenmutter zusammenwirkt, und Rückhaltemittel (6, 7), um zu verhindern, daß sich das Verriegelungsmittel (4) in die Lockerungsrichtung der Schraubenmutter bezüglich der ersten Rohrleitung (1) dreht, wenn sich das Verriegelungsmittel (4) in Verriegelungsstellung befindet, aufweist,
**dadurch gekennzeichnet, daß** die Rückhaltemittel den Rückhalt des Verriegelungsmittels (4) bezüglich eines Stützmittels (3) gewährleisten, welches an der ersten Rohrleitung (1) fest angebracht werden soll und um das Außengewinde (34) herum verläuft, und wobei zwischen dem Stützmittel (3) und dem Außengewinde (34) ein ausreichender radialer Abstand ist, der es ermöglicht, daß die Schraubenmutter (2) mit dem Außengewinde (34) zusammenwirken kann.

7. Vorrichtung nach einem der Ansprüche 1 bis 6,
**dadurch gekennzeichnet, daß** das Rückstellmittel (5) zwischen dem Verriegelungsmittel (4) und dem Stützmittel (3) wirkt.

8. Vorrichtung nach Anspruch 7,
**dadurch gekennzeichnet, daß** das Verriegelungsmittel (4), das Stützmittel (3) und das Rückstellmittel (5) eine Unteranordnung bilden, die dazu bereit ist auf die erste Rohrleitung (1) über das die Dichtform (32) aufweisende Ende aufgezogen, und gegen eine Schulter der ersten Rohrleitung (1) befestigt zu werden.

9. Vorrichtung nach einem der Ansprüche 1 bis 8,
**dadurch gekennzeichnet, daß** das Rückstellmittel (5) innerhalb des Verriegelungsmittels (4) verläuft, welches in Form einer auf der Außenseite des Stützmittels (3) verschiebbaren Manschette ausgeführt ist, und sich in der Nähe eines zu der Schraubenmutter (2) hingewendeten freien Endes des Stützmittel (3) auf dieses stützt.

10. Vorrichtung nach einem der Ansprüche 1 bis 8,
**dadurch gekennzeichnet, daß** das Rückstellmittel (5) innerhalb des Verriegelungsmittels (4) verläuft, welches in Form einer auf der Außenseite des Stützmittels (3) verschiebbaren Manschette ausgeführt ist, und sich auf eine Seite eines, auf der Außenseite des Stützmittels (3) vorgesehenen, Kragens (44) stützt, wobei der Kragen (44) eine gegenüberliegende Seite aufweist, die als Anschlagsmittel dient ,das den vom Rückstellmittel (5) verursachten Lauf des Verriegelungsmittels (4) begrenzt.

11. Vorrichtung nach einem der Ansprüche 1 bis 8,
**dadurch gekennzeichnet, daß** das Stützmittel (3) und das Verriegelungsmittel (4) gegenseitige Anschlagsmittel (44, 46) aufweisen, die den vom Rückstellmittel (5) verursachten Lauf des Verriegelungsmittels (4) bezüglich des Stützmittels (3) begrenzen.

12. Vorrichtung nach Anspruch 10 oder 11,
**dadurch gekennzeichnet, daß** die den vom Rückstellmittel (5) verursachten Lauf des Verriegelungsmittels (4) begrenzenden Anschlagsmittel (44, 46) zur gleichen Zeit Einklinkmittel (6, 7) sind, die einen Teil der Rückhaltemittel bilden und die die drehfteste Verbindung zwischen dem Stützmittel (3) und dem Verriegelungsmittel (4) gewährleisten, wenn sich das Verriegelungsmittel (4) in Verriegelungsstellung befindet, wobei das Verriegelungsmittel (4), wenn es von der Verriegelungsstellung entfernt ist, wenigstens eine gewisse Rotationsfreiheit gegenüber dem Stützmittel (3) hat.

13. Vorrichtung nach einem der Ansprüche 1 bis 11,
**dadurch gekennzeichnet, daß** wenn das Verriegelungsmittel (4) in Verriegelungsstellung ist, Einklinkmittel (6, 7) das Verriegelungsmittel (4) und das Stützmittel (3) drehfest verbinden, und daß, wenn das Verriegelungsmittel (4) in zurückgezogener Stellung ist, die Einklinkmittel (6, 7) ausgeklinkt sind und eine Rotation des Verriegelungsmittels (4) erlauben.

14. Vorrichtung nach Anspruch 12 oder 13,
**dadurch gekennzeichnet, daß** die Einklinkmittel (6, 7) fähig sind, in mehreren Winkelstellungen des Verriegelungsmittels (4) bezüglich des Stützmittels (3) einzuklinken.

15. Vorrichtung nach Anspruch 14,
**dadurch gekennzeichnet, daß** die Einklinkmittel (6, 7) die Rotation des Verriegelungsmittels (4), wenn dieses in Verriegelungsstellung ist, nur in Lockerungsrichtung der Schraubenmutter (2) sperren.

16. Vorrichtung nach Anspruch 14 oder 15,
**dadurch gekennzeichnet, daß** die Einklinkmittel (6, 7) eine Zahnung (6) auf einem (3) der Stütz- und Verriegelungsmittel aufweisen, wobei das andere (4) der Stütz- und Verriegelungsmittel wenigstens einen Zahn (7) aufweist, der nach Wahl in eine der Vertiefungen der Zahnung (6) eindringen kann, wenn das Verriegelungsmittel (4) von der zurückgezogenen Stellung in die Verriegelungsstellung übergeht.

17. Vorrichtung nach Anspruch 16,
**dadurch gekennzeichnet, daß** die Zahnung (6) unsymmetrisch ist, um die Rotation des Verriegelungsmittels (4) nur in Lockerungsrichtung der Schraubenmutter (2) zu sperren.

18. Vorrichtung nach Anspruch 14 oder 15,
**dadurch gekennzeichnet, daß** wenigstens ein zu einem (4) der Stütz- und Verriegelungsmittel gehörender Zahn (7) der Einklinkmittel (6, 7) gleichzeitig Teil von Haltemitteln ist, die außerdem Stoppmittel (12, 14) aufweisen, die aufdem anderen (3) der Stütz- und Verriegelungsmittel vorgesehen sind, wobei die Anordnung so ist, daß der Zahn (7) in Eingriff mit den Stoppmitteln (12, 14) gelangen kann, um in lösbarer Weise das Verriegelungsmittel (4) in zurückgezogener Stellung zurückzuhalten.

19. Vorrichtung nach Anspruch 18,
**dadurch gekennzeichnet, daß** die Stoppmittel (12, 14) einen Gang (51) aufweisen, in den der Zahn durch Rotation des Verriegelungsmittels (4) gegenüber dem Stützmittel (3) eingreifen kann, wenn das Verriegelungsmittel (4) in zurückgezogener Stellung ist.

20. Vorrichtung nach Anspruch 18,
**dadurch gekennzeichnet, daß** die Stoppmittel (12, 14) eine Schulter (52) aufweisen, hinter welche der Zahn (7) durch elastische Verformung eingreifen kann, wenn das Verriegelungsmittel (4) die zurückgezogene Stellung erreicht.

21. Vorrichtung nach einem der Ansprüche 1 bis 11,
**dadurch gekennzeichnet, daß** in zurückgezogener Stellung die Rückhaltemittel (6, 7) dem Verriegelungsmittel (4) erlauben, sich gegenüber dem Sützmittel (3) zu drehen.

22. Vorrichtung nach einem der Ansprüche 1 bis 15,
**dadurch gekennzeichnet, daß** sie Mittel (7, 12, 14) zum Halten des Verriegelungsmittels (4) in der zurückgezogenen Stellung aufweist.

23. Vorrichtung nach Anspruch 22,
**dadurch gekennzeichnet, daß** die Haltemittel (7, 14) von der Art mit reversibler Verklinkung sind.

24. Vorrichtung nach Anspruch 23,
**dadurch gekennzeichnet, daß** die Haltemittel einen Zahn (7) von einem (4) der Stütz- und Verriegelungsmittel aufweisen, der geeignet ist, hinter eine Schulter (52) des anderen (3) der Stütz- und Verriegelungsmittel einzugreifen.

25. Vorrichtung nach Anspruch 20 oder 24,
**dadurch gekennzeichnet, daß** die Schulter (52) auf einer peripheren Verdickung (14) des Mittels (3), welches die Stoppmittel (12, 14) trägt, gebildet ist.

26. Vorrichtung nach einem der Ansprüche 18 bis 20 und 22 bis 25,
**dadurch gekennzeichnet, daß** die Haltemittel (7, 12, 14) so ausgelegt sind, daß sie sich unter der Einwirkung von Vibrationen automatisch freisetzen.

27. Vorrichtung nach einem der Ansprüche 1 bis 26,
**dadurch gekennzeichnet, daß** das Verriegelungsmittel (4) und die Schraubenmutter (2) unter der Einwirkung des Rückstellmittels (5) zur gegenseitigen Reibung geeignet sind, wenn das Verriegelungsprofil (8) unfähig ist, auf das dazu komplementäre Profil (9) der Schraubenmutter (2) einzugreifen.

## Claims

1. A device for coupling two pipes terminated by sealing conformations (32, 33), the first of the pipes (1) carrying a thread or the like (34) before its sealing conformation (32) and the other pipe (31) carrying a rotary nut (2) for cooperating with the thread or the like (34), and comprising a locking device for mechanically locking the coupling, the locking device comprising a locking member (4) which is longitudinally mobile with respect to the first pipe (1), a return means (5) biassing the locking member (4) from a withdrawn position releasing the nut (2) and towards a locking position in which, when the two pipes (1, 31) are coupled, a locking shaped portion (8) of the locking member (4) cooperates with a complementary shaped portion (9) of the nut, and retaining means (6, 7) to prevent the locking member (4) from rotating in the direction of unscrewing the nut with respect to the first pipe (1) when the locking member (4) is in the locking position, characterized in that the retaining means provide retention of the locking member (4) with respect to a support member (3) which is permanently fixed to the first pipe (1) and extending around the thread (34), with a sufficient radial distance between the support member (3) and the thread (34) to allow the nut (2) to cooperate with the thread (34).

2. A device according to Claim 1, characterized in that the shaped portion (8) of the locking member and the complementary shaped portion (9) of the nut are of the hexagonal type.

3. A device according to Claim 1 or 2, characterized in that the shaped portion (8) of the locking member (4) is a set of teeth and the complementary shaped portion of the nut is a complementary set of teeth (9) formed on or added to the nut (2).

4. A device according to one of Claims 1 to 3, characterized in that the support member (3) and the locking member (4) together form a protection for the thread (34) and for the sealing conformation (32) of the first pipe (1) when the two pipes (1, 31) are uncoupled.

5. A device according to one of Claims 1 to 4, characterized in that the support member (3) can be fixed to the first pipe (1) at a location situated axially between the thread or the like (34) and a grasping conformation such as a hexagonal conformation (37) and allows free access to the grasping conformation (37).

6. A device for mechanically locking a coupling between two pipes terminated by sealing conformations (32, 33), the first of the pipes (1) carrying a thread or the like (34) before its sealing conformation (32) and the other pipe (31) carrying a rotary nut (2) for cooperating with the thread or the like (34), the locking device comprising a locking member (4) which is longitudinally mobile with respect to the first pipe (1), a return means (5) biassing the locking member (4) from a withdrawn position releasing the nut (2) and towards a locking position in which, when the two pipes (1, 31) are coupled, a locking shaped portion (8) of the locking member (4) cooperates with a complementary shaped portion (9) of the nut, and retaining means (6, 7) to prevent the locking member (4) from rotating in the direction of unscrewing the nut with respect to the first pipe (1) when the locking member (4) is in the locking position, characterized in that the retaining means provide retention of the locking member (4) with respect to a support member (3) adapted to be permanently fixed to the first pipe (1) and extending around the thread (34), with a sufficient radial distance between the support member (3) and the thread (34) to allow the nut (2) to cooperate with the thread (34).

7. A device according to one of Claims 1-6, characterized in that the return means (5) acts between the locking member (4) and the support member (3).

8. A device according to Claim 7, characterized in that the locking member (4), the support member (3) and the return means (5) are constituted as a subassembly ready to be fitted to the first pipe (1) by the end comprising the sealing conformation (32), and to be fixed against a shoulder of the first pipe (1).

9. A device according to one of Claims 1 to 8, characterized in that the return means (5) extends inside the locking member (4) made in the form of a cup sliding over the exterior of the support member (3), and is supported on the support member (3) in the vicinity of a free end of the latter, facing towards the nut (2).

10. A device according to one of Claims 1 to 8, characterized in that the return means (5) extends inside the locking member (4) made in the form of a cup sliding over the exterior of the support member (3), and bears against a face of a collar (44) provided on the external face of the support member (3), the collar (44) having an opposite face (6) serving as a stop means limiting the travel of the locking member (4) under the action of the return means (5).

11. A device according to one of Claims 1 to 8, characterized in that the support member (3) and the locking member (4) comprise mutual stop means (44, 46) which limit the travel of the locking member (4) with respect to the support member (3) under the action of the return means (5).

12. A device according to Claim 10 or 11, characterized in that the stop means (44, 46) limiting the travel of the locking member (4) under the action of the return means (5) are at the same time engagement means (6, 7) forming part of the retaining means and which ensure the rotational connection between the support member (3) and the locking member (4) when the locking member (4) is in the locking position, the locking member (4) having, when it is apart from the locking position, at least a certain freedom of rotation with respect to the support member (3).

13. A device according to one of Claims 1 to 11, characterized in that when the locking member (4) is in the locking position, engagement means (6, 7) rotationally couple the locking member (4) and the support member (3) and, when the locking member (4) is in the withdrawn position, the engagement means (6, 7) are disengaged and allow a rotation of the locking member (4).

14. A device according to Claim 12 or 13, characterized in that the engagement means (6, 7) are capable of achieving the engagement in several angular positions of the locking member (4) with respect to the support member (3).

15. A device according to Claim 14, characterized in that when the locking member is in the locking position the engagement means (6, 7) prevent the rotation of the locking member (4) only in the direction of loosening the nut (2).

16. A device according to Claim 14 or 15, characterized in that the engagement means (6, 7) comprise teeth (6) on one (3) of the support and locking members, the other one (4) of the support and locking members comprising at least one tooth (7) which can penetrate into a choice of any one of the gaps in the teeth (6) when the locking member (4) moves from the withdrawn position into the locking position.

17. A device according to Claim 16, characterized in that the teeth (6) are asymmetrical in order to prevent the rotation of the locking member (4) only in the direction of loosening the nut (2).

18. A device according to Claim 14 or 15, characterized in that at least one tooth (7) of the engagement means (6, 7), being part of one (4) of the support and locking members, is at the same time part of holding means furthermore comprising stop means (12, 14) provided on the other (3) one of the support and locking members, the arrangement being such that the tooth (7) can engage with the stop means (12, 14) in order to removably hold the locking member (4) in the withdrawn position.

19. A device according to Claim 18, characterized in that the stop means comprise a slot (51) into which the tooth can engage by rotation of the locking member (4) with respect to the support member(3) when the locking member (4) is in the withdrawn position.

20. A device according to Claim 18, characterized in that the stop means (12, 14) comprise a shoulder (52) behind which the tooth (7) can engage by elastic deformation when the locking member (4) reaches the withdrawn position.

21. A device according to one of Claims 1 to 11, characterized in that, in the withdrawn position, the retaining means (6, 7) allow the locking member (4) to rotate with respect to the support member (3).

22. A device according to one of Claims 1 to 15, characterized by comprising means (7, 12, 14) for holding the locking member (4) in the withdrawn position.

23. A device according to Claim 22, characterized in that the holding means (7, 14) are of the reversible pawl-like engagement type.

24. A device according to Claim 23, characterized in that the holding means comprise a tooth (7) of one (4) of the support and locking members, capable of engaging behind a shoulder (52) of the other one (3) of the support and locking members.

25. A device according to Claim 20 or 24, characterized in that the shoulder (52) is formed on a peripheral bulge (14) of the member (3) carrying the stop means (12, 14).

26. A device according to one of Claims 18 to 20 and 22 to 25, characterized in that the holding means (7, 12, 14) are designed to become released automatically under the effect of vibration.

27. A device according to one of Claims 1 to 26, characterized in that the locking member (4) and the nut (2) are capable of mutual friction under the action of the return means (5) when the locking shaped portion (8) is not capable of engaging over the complementary shaped portion (9) of the nut (2).
